Europäisches Patentamt

European Patent Office

Office européen des brevets

(19)

(11) Numéro de publication : **0 335 443 B1**

## (12) FASCICULE DE BREVET EUROPEEN

(45) Date de publication du fascicule du brevet :
29.05.91 Bulletin 91/22

(51) Int. Cl.⁵ : **F16B 12/20**

(21) Numéro de dépôt : **89200715.4**

(22) Date de dépôt : **21.03.89**

(54) **Dispositif d'assemblage pour l'accrochage d'un élément sur un support, adapte pour permettre d'ajuster après assemblage la position dudit élément sur ledit support et système d'assemblage de deux supports comportant des éléments dotés de tels dispositifs d'assemblage.**

(30) Priorité : 25.03.88 FR 8804474

(43) Date de publication de la demande :
04.10.89 Bulletin 89/40

(45) Mention de la délivrance du brevet :
29.05.91 Bulletin 91/22

(84) Etats contractants désignés :
DE ES FR GB IT SE

(56) Documents cités :
EP-A- 0 016 618
FR-A- 1 291 602

(73) Titulaire : **MOULAGES PLASTIQUES DU MIDI
Société à Responsabilité Limitée
10, boulevard de Joffrery
F-31601 Muret Cédex (FR)**

(72) Inventeur : **Bares, Jean-Jacques
1895 chemin de Beaumont Eaunes
F-31600 Muret (FR)**
Inventeur : **Sicard, Michel
37, rue Marcel Doret
F-31600 Muret (FR)**

(74) Mandataire : **Barre, Philippe
Cabinet Barre-Gatti-Laforgue 95 rue des
Amidonniers
F-31069 Toulouse Cédex (FR)**

Jouve, 18, rue Saint-Denis, 75001 PARIS

## Description

L'invention concerne un dispositif d'assemblage pour l'accrochage sur un support d'un élément comportant une platine dotée d'au moins un alésage oblong et adaptée pour être appliquée et fixée sur ledit support, du type adapté pour permettre d'ajuster après assemblage la position dudit élément sur ledit support. Elle s'étend à des systèmes d'assemblage de deux supports comportant des éléments dotés d'un tel dispostif d'assemblage, aptes à être solidarisés sur lesdits supports.

Il existe un grand nombre de systèmes d'assemblage pour l'accrochage de deux supports, comprenant des éléments aptes à être solidarisés respectivement sur chacun de ces supports et dotés de moyens de coopération permettant d'assembler et de désunir ces supports. De tels systèmes sont en particulier décrits dans les brevets français 1.521.449, 2.585.090, 1.491.842, 1.492.086, 2.106.883, 2.084.654, 2.442.365, 2.445.461, 2.446.402, 2.446.946, 2.415.737, 2.360.780, 2.292.885 dans le domaine de l'ameublement et 2.557.313, 2.585.088, 2.532.376, 2.559.558, 2.026.850, 1.530.643, 1.469.101 et 2.039.646 dans des domaines divers.

Toutefois, hormis le système décrit dans le brevet FR-A-2.557.313 dont l'emploi reste cependant très spécifique, aucun de ces systèmes ne permet d'ajuster la position des éléments fixés sur les supports. De plus, tout comme le système décrit dans le brevet FR-A-2.557.313, chacun de ces systèmes est destiné à une utilisation spécifique et ne présente donc pas un caractère universel permettant de varier à loisir ses applications. Enfin, aucun de ces systèmes ne cumule les avantages suivants : très faible coût de revient, assemblage rigide ne nécessitant aucun organe mobile, sécurité vis-à-vis d'un désassemblage accidentel, désassemblage très rapide en cas de nécessité et possibilité de nombreux assemblages et désassemblages sans risque de détérioration du système.

La présente invention a pour objectif de combler ces lacunes en fournissant un système d'assemblage qui allie les avantages précités et offre la possibilité de régler la position de chaque élément sur son support.

A cet effet, l'invention concerne un dispositif d'assemblage, sur un support, d'un élément comportant une platine dotée d'au moins une lumière oblongue adaptée pour être appliquée et fixée sur ledit support, ledit dispositif d'assemblage étant adapté pour permettre d'ajuster après assemblage la position dudit élément sur ledit support.

Selon l'invention, ce dispositif d'assemblage se caractérise en ce qu'il comprend, pour chaque lumière oblongue :

    – un logement ménagé dans la platine et dans lequel débouche ladite lumière oblongue,

    – un disque excentrique disposé dans le logement et de forme conjuguée dudit logement, ledit disque excentrique étant doté d'un alésage excentré ménagé de façon à se trouver en regard de la lumière oblongue,

    – un organe de fixation doté d'une douille de section conjuguée de l'alésage du disque et d'une tige d'ancrage apte à traverser la lumière oblongue de la platine et ledit alésage,

    – des moyens de manoeuvre du disque excentrique adaptés pour permettre une rotation dudit disque autour de la tige d'ancrage de l'organe de fixation.

Ce dispositif d'assemblage permet donc d'ajuster, après assemblage, la position de l'élément sur son support par une simple rotation du disque excentrique. Il présente, en outre, l'avantage de pouvoir être adapté sur divers types de systèmes d'assemblage pour l'accrochage d'un objet sur un support ou de deux supports entre eux, du type comportant des éléments solidarisés sur lesdits objet et supports et adaptés pour coopérer en vue d'assembler ces derniers.

Toutefois, l'invention vise préférentiellement des systèmes d'assemblage comportant des éléments femelle et mâle dotés respectivement d'une glissière et d'un coulisseau apte à coulisser dans ladite glissière.

Ainsi, selon un premier mode de réalisation préféré, l'invention s'étend à un système d'assemblage pour l'accrochage de deux supports, dits premier et deuxième supports caractérisé en ce qu'il comprend deux éléments aptes à être solidarisés respectivement auxdits premier et deuxième supports :

    – un élément, dit femelle, comportant une platine dotée d'une glissière en saillie sur ladite platine et de deux dispositifs d'assemblage conformes à l'invention disposés de part et d'autre de ladite glissière,

    – un élément, dit mâle, comportant une platine portant un coulisseau de forme adaptée pour coulisser dans la glissière de l'élément femelle, et dotée de deux dispositifs d'assemblage conforme à l'invention disposés de part et d'autre dudit coulisseau,

    – lesdits glissière et coulisseau étant conformés de façon à permettre le blocage du coulisseau dans la glissière.

Selon un autre mode de réalisation préféré, l'invention s'étend à un système d'assemblage pour l'accrochage de deux supports, dits premier et deuxième supports, caractérisé en ce qu'il comprend:

    – deux éléments, dits femelles, comportant une platine dotée d'une glissière en saillie sur ladite platine et de deux dispositifs d'assemblage conformes à l'invention disposés de part et d'autre de ladite glissière,

– un élément, dit mâle, comportant deux coulisseaux de formes adaptées pour coulisser, chacun, dans la glissière d'un élément femelle,

– lesdits glissières et coulisseaux étant conformés de façon à permettre le blocage des coulisseaux à l'intérieur des glissières.

Ces deux modes de réalisation sont particulièrement adaptés pour réaliser l'assemblage d'éléments dans le domaine de l'ameublement, tels que panneaux de meubles, profilés, étagères...

En effet, de tels assemblages tels qu'assemblages à angle droit de deux panneaux ou assemblage bout à bout de deux panneaux alignés, nécessitent, d'une part, un alignement parfait desdits panneaux et, d'autre part, un bridage efficace. Or ces systèmes d'assemblage permettent un réglage de la position des panneaux selon deux directions sensiblement orthogonales, par rotation des disques excentriques, garantissant selon une de ces directions un alignement parfait de ces panneaux et selon l'autre direction un bridage efficace et ce malgré les imprécisions éventuelles de perçage.

Selon un troisième mode de réalisation préférentiel, l'invention s'étend à un système d'assemblage pour l'accrochage d'un objet sur un support, caractérisé en ce qu'il comprend deux éléments, aptes à être solidarisés respectivement auxdits objet et support :

– un élément, dit femelle, solidarisé au support et comportant une platine dotée d'une glissière en saillie sur ladite platine et de deux dispositifs d'assemblage conformes à l'invention disposés de part et d'autre de ladite glissière,

– un élément, dit mâle, solidarisé à l'objet, comportant un coulisseau de forme adaptée pour coulisser dans la glissière de l'élément femelle et des moyens de maintien de l'objet, portés par le coulisseau et de formes adaptées à la nature et à la forme dudit objet.

Ce système d'assemblage trouve son application pour l'assemblage d'un support sur un objet où il permet d'assurer un bridage efficace et d'ajuster la position angulaire entre support et objet.

Une application consiste à utiliser ce système pour l'assemblage de deux éléments solidarisés par une liaison du type à charnières. Dans ce cas, les moyens de maintien de l'objet comprennent des moyens de fixation de l'élément mâle sur ledit objet articulés sur le coulisseau par un système à charnières. Le système d'assemblage permet alors de solutionner les problèmes d'équerrage fréquemment posés par la mise en place d'un système à charnières.

Par ailleurs, le système d'assemblage conforme à l'invention est préférentiellement prévu pour permettre l'accrochage amovible de supports.

A cet effet et selon un premier mode de réalisation préférentiel :

– la platine de chaque élément femelle comporte à l'intérieur de la glissière une languette flexible s'étendant en saillie et apte à se déformer élastiquement par rapport à ladite platine, ladite languette étant dotée d'un ergot d'encliquetage,

– chaque coulisseau de l'élément mâle est doté d'une lumière apte à loger l'ergot d'encliquetage de la languette.

Selon un deuxième mode de réalisation préférentiel :

– chaque coulisseau de l'élément mâle comporte une languette flexible s'étendant en saillie et apte à se déformer élastiquement par rapport audit coulisseau, ladite languette étant dotée d'un ergot d'encliquetage,

– chaque élément femelle comporte une glissière dotée d'une paroi frontale dotée d'une lumière apte à loger l'ergot d'encliquetage de la languette.

D'autres caractéristiques, buts et avantages de l'invention se dégageront de la description détaillée qui suit et de l'examen des dessins annexés qui en présentent, à titre d'exemples non limitatifs des modes de réalisation de l'invention. Sur ces dessins qui font partie intégrante de la présente description :

– la figure 1 est une vue en perspective des éléments mâle et femelles constitutifs d'un premier mode de réalisation d'un système d'assemblage conforme à l'invention, pour l'assemblage à angle droit de deux panneaux,

– la figure 2 est une vue en perspective de ce système d'assemblage dans la position assemblée des éléments,

– la figure 3 est une coupe longitudinale par un plan AA de ce système d'assemblage dans sa position assemblée,

– la figure 4a en est une coupe longitudinale par un plan BB,

– la figure 4b en est une coupe longitudinale partielle par un plan BB sur laquelle les éléments sont fixés sur le support au moyen d'un deuxième type d'organes de fixation,

– la figure 5 en est une coupe transversale par un plan CC,

– la figure 6 est une vue en perspective de l'élément mâle d'un deuxième mode de réalisation de système d'assemblage conforme à l'invention,

– la figure 7 est une vue en perspective des divers éléments constitutifs d'une variante de système d'assemblage conforme à l'invention pour l'assemblage à angle droit de deux panneaux,

– la figure 8 est une vue en perspective d'un système d'assemblage destiné à l'assemblage de trois panneaux,

– la figure 9a est une vue de face d'un système d'assemblage à galets,

– la figure 9b est une vue de côté de ce système d'assemblage à galets,

– la figure 10a est une vue de face d'un système d'assemblage à charnières,

– la figure 10b est une vue de côté de ce système d'assemblage à charnières,

– la figure 11 est une vue longitudinale de côté d'un système d'assemblage pour compas d'abattant.

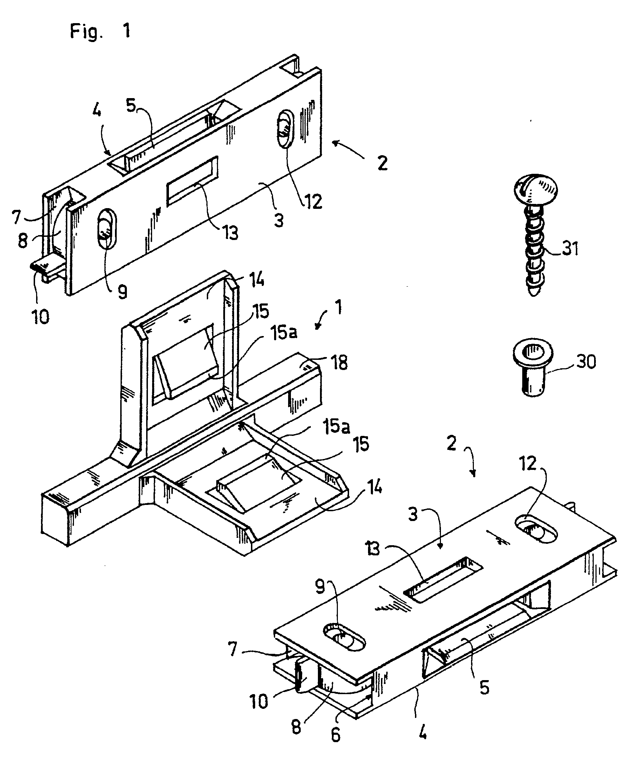

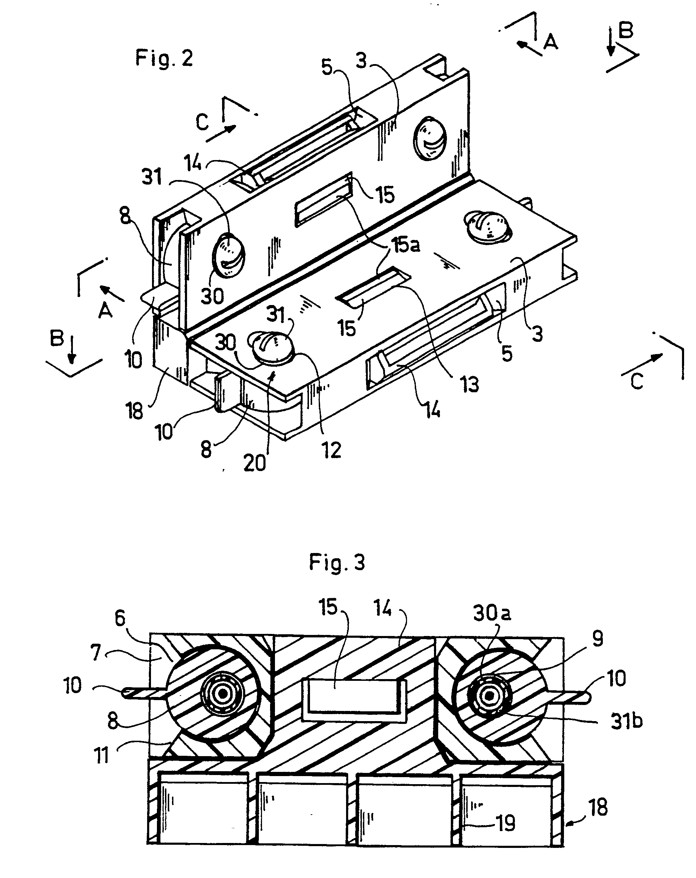

Les systèmes d'assemblage rapide représentés aux figures 1 à 11 sont destinés à permettre un accrochage amovible d'un objet sur un support ou de deux supports entre eux, avec possibilité de réglage, après assemblage, de la position relative desdits objet et support. Ils comprennent un élément mâle 1 et un ou deux éléments femelles 2 moulés par injection d'une matière thermoplastique telle que du polyarylamide, deux de ces éléments étant aptes à être solidarisés respectivement à l'objet et au support.

Chaque élément femelle 2 se présente sous la forme d'un parallélépipède rectangle comportant deux parois frontales 3, 4 aptes à être appliquées l'une ou l'autre contre l'objet ou le support en vue de la fixation de cet élément femelle 2. Dans sa partie médiane, cet élément est percé d'une lumière transversale 5 de section longitudinale en forme de I couché, formant une glissière débouchant au niveau des deux parois latérales longitudinales.

De part et d'autre de cette glissière 5 l'élément femelle 2 présente un évidement 6 de forme générale cylindrique tronquée débouchant au niveau d'une ouverture 7 ménagée dans la paroi latérale.

Dans chacun de ces évidements 6 est disposé un disque excentrique 8 présentant une face périphérique crantée et doté d'un alésage 9 excentré par rapport à son axe de symétrie et d'un organe de manoeuvre 10 agencé de façon à faire saillie au travers de l'ouverture 7 de la paroi latérale. Chacun de ces disques 8 étant destiné à être introduit en force après moulage de l'élément femelle 2, chaque évidement 6 débouche au droit d'une face latérale par l'intermédiaire de retours chanfreinés 11 aptes à faciliter l'introduction de ces disques.

Les parois frontales 3, 4 de cet élément femelle 2 sont également percées, en regard, chacune de deux trous oblongs 12 allongés transversalement ménagés de façon à se trouver en regard des alésages 9 des disques excentriques 8.

En dernier lieu, les parois frontales 3, 4 sont percées, en regard, d'une lumière 13 ménagée de façon à déboucher dans la glissière 5 de l'élément femelle 2.

Chaque élément mâle 1 comporte, quant à lui, au moins un coulisseau 14 de forme adaptée pour être engagé à l'intérieur de la glissière 5 d'un élément femelle 2. A cet effet, ce coulisseau 14 présente comme cette glissière 5 une section en forme de I.

Ce coulisseau 14 comporte également une languette flexible 15 s'étendant obliquement par rapport à l'âme de celui-ci et apte à se déformer élastiquement. Au niveau de son extrémité libre, cette languette est conformée de façon à présenter la forme d'un ergot d'encliquetage 15a apte à venir se loger dans la lumière 13 d'un élément femelle 2.

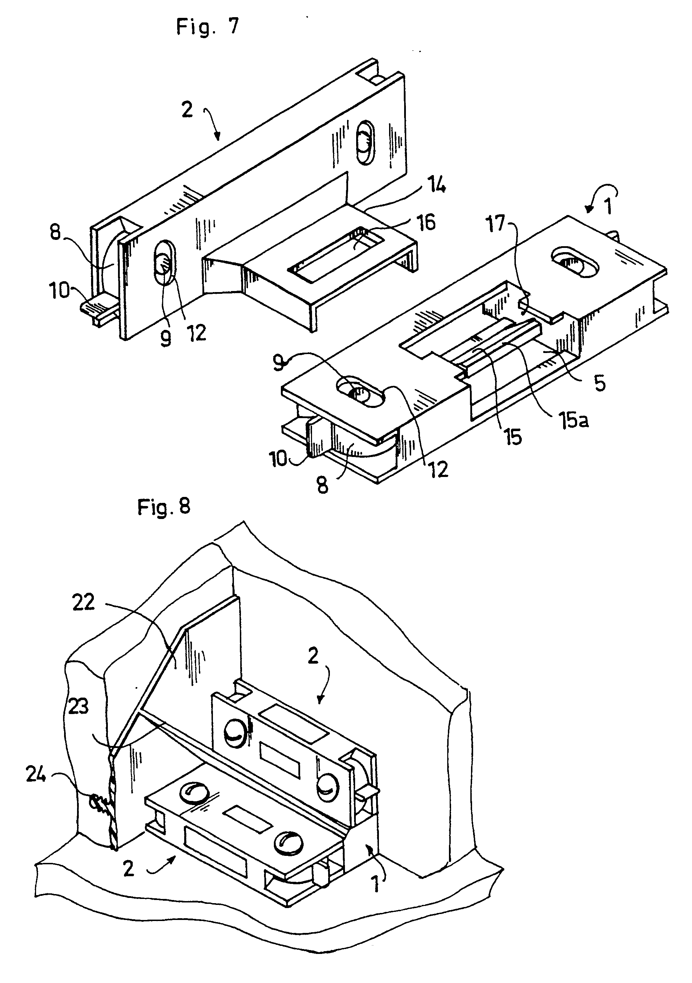

Il est à noter que, tel que représenté à la figure 7, cette languette flexible 5 peut être disposée à l'intérieur de la glissière 5 de l'élément femelle 2, chaque coulisseau 14 étant alors doté d'une lumière 16 apte à loger l'ergot d'encliquetage 15a de cette languette 15.

En outre, dans ce cas, le désassemblage est obtenu, soit en repoussant la languette grâce à une ouverture 17 ménagée dans la paroi frontale de l'élément femelle en regard de l'ergot d'encliquetage 15a, soit en dotant la languette 15 d'une extrémité chanfreinée permettant de l'abaisser et de la repousser à l'aide d'une lame introduite dans la glissière 5.

Tel qu'illustré aux figures, l'élément mâle 1 est doté, outre ce coulisseau 14, soit d'un deuxième coulisseau, soit de moyens de maintien, portés par le coulisseau, et de formes adaptées à la nature et à la forme de l'objet. De même, le nombre d'éléments femelles 2 associés à cet élément mâle 1 peut varier selon les applications.

Selon le mode de réalisation représenté aux figures 1 à 5, le système d'assemblage comporte deux éléments femelles 2 tels que décrit ci-dessus, aptes à être fixés respectivement chacun sur un support et un élément mâle 1 adapté pour coopérer avec ces éléments femelles en vue d'assurer l'accrochage amovible desdits supports.

Ce système est particulièrement destiné à l'assemblage à angle droit de panneaux, profilés... notamment dans le domaine de l'ameublement.

L'élément mâle 1 comporte dans ce cas une âme 18 en forme de L renforcée intérieurement au moyen d'une pluralité de nervures transversales 19 et deux coulisseaux 14 s'étendant orthogonalement par rapport à chacune des faces de cette âme.

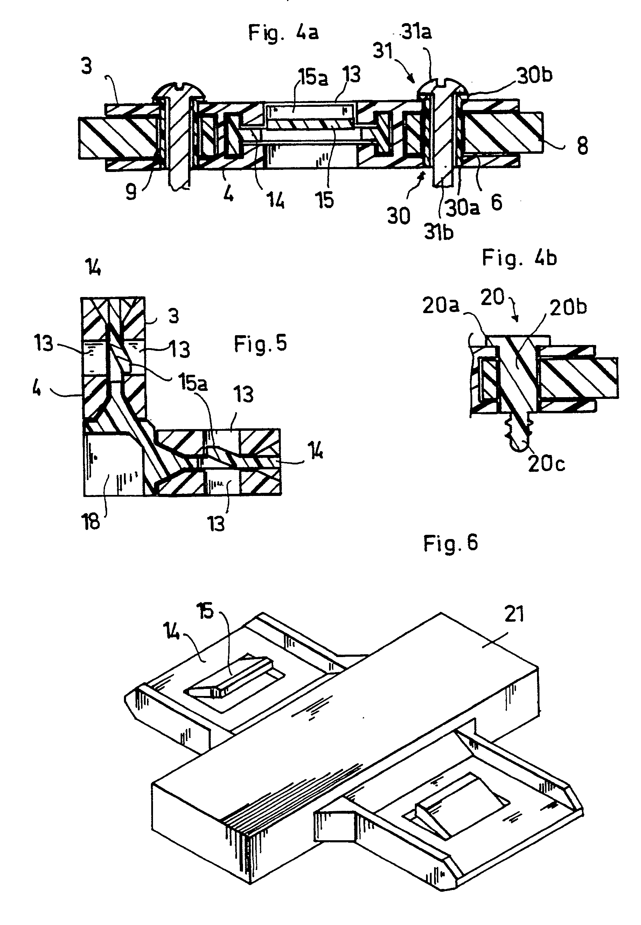

Après perçage des panneaux, les deux éléments femelles sont fixés sur chacun de ces panneaux au moyen d'organes de fixation pouvant se présenter sous diverses formes. Tel que représenté à la figure 4a, cet organe de fixation comprend, en premier lieu, une entretoise 30 présentant la forme d'un manchon 30a de diamètre externe conjugué de la section de l'alésage 9 du disque 8 et de longueur conjuguée de l'épaisseur de l'élément 1 ou 2. Ce manchon 30a comporte, en outre, vers une de ses extrémités, une collerette d'appui 30b sur la face frontale avant 3 de l'élement.

La fixation est alors assurée au moyen d'une vis de fixation 31 dont la tige filetée 31b est disposée à l'intérieur du manchon 30a, la tête de manoeuvre 31a de cette vis 31 venant en appui sur la collerette 30a.

Tel que représenté à la figure 4b, cet organe de fixation peut également être constitué d'un rivet ou cheville à ailettes 20 comportant une tête de manoeuvre 20a apte à venir en appui sur la face frontale avant 3 de l'élément, une douille 20b de section conjuguée de celle de l'alésage 9 et de longueur conjuguée de l'épaisseur de l'élément 1, 2 et une tige d'ancrage 20c portée par la douille 20b et de section inférieure à celle de cette douille.

Ces deux organes de fixation présentent l'avantage de permettre d'assurer une fixation efficace de l'élément 1, 2 sur son support, sans toutefois bloquer en rotation le disque excentrique 8 à l'intérieur de son logement 6.

Une fois la fixation des éléments femelles 2 réalisée, un coulisseau 14 de l'élément mâle 1 est introduit à l'intérieur de la glissière 5 d'un de ces éléments femelles 2, puis les panneaux sont amenés bout à bout afin de permettre l'introduction et l'encliquetage du deuxième coulisseau 14 de l'élément mâle 1 à l'intérieur de la glissière 5 du deuxième élément femelle.

Cet assemblage étant réalisé, la position relative des panneaux est ajustée au moyen des disques excentriques 8 dont le mouvement de rotation permet un déplacement des éléments femelles 2 par rapport aux organes de fixation logés dans les alésages oblongs 12.

La présence de quatre disques excentriques 8 permet ainsi un réglage de la position des panneaux selon deux directions orthogonales garantissant un alignement parfait et un bridage efficace.

Il est en outre à noter que la face crantée du disque excentrique garantit contre tout desserrage accidentel ultérieur par vibration... D'autre part, les panneaux peuvent par la suite être rapidement démontés, sans risque de détérioration du système d'assemblage, en repoussant la languette flexible 15 du coulisseau 14 à l'intérieur de la glissière 5 de l'élément femelle 2.

Selon le même principe et tel que représenté à la figure 6, ce système d'assemblage peut également être adapté pour réaliser l'assemblage bout à bout de deux panneaux alignés.

La seule modification consiste alors à utiliser un élément mâle 1 comportant une âme 21 en forme de U renforcée intérieurement au moyen d'une pluralité de nervures transversales et deux coulisseaux 14 coplanaires s'étendant orthogonalement par rapport à chacune des ailes de cette âme 21.

Selon une variante de l'invention, ce type d'assemblage à angle droit ou bout à bout de deux panneaux peut également être réalisé tel que représenté à la figure 7 en utilisant un élément mâle 1 et un élément femelle 2 aptes à être fixés respectivement sur chacun des panneaux.

L'élément femelle 2 utilisé est similaire à ceux décrits ci-dessus.

L'élément mâle 1 présente la même forme générale que cet élément femelle 2, la seule différence se situant au niveau de la présence d'un coulisseau 14 en lieu et place de la glissière 5, coulisseau qui s'étend orthogonalement par rapport à une des faces frontales de façon à pouvoir venir se loger dans la glissière 5 de l'élément femelle.

Le système d'assemblage représenté à la figure 8 est destiné quant à lui à l'assemblage de trois panneaux. Selon le même principe que le dispositif représenté aux figures 1 à 5, il comprend deux éléments femelles 2 solidarisés respectivement sur deux de ces panneaux et un élément mâle 1 doté de deux coulisseaux 14 s'étendant selon des plans orthogonaux et aptes à venir se loger dans les glissières 5 de ces éléments femelles 2.

En outre, cet élément mâle 1 comporte une platine 22 solidarisée sur une des faces d'extrémité longitudinale de l'âme 18, la rigidité de la liaison âme-platine étant assurée par un gousset 23 s'étendant selon le plan bissecteur de l'angle délimité par les deux coulisseaux 14.

Deux chevilles 24 s'étendant par rapport à la face de cette platine 22 opposée à l'âme 18 sont en outre prévues pour permettre la fixation du troisième panneau sur cette platine.

Ce système permet donc d'assembler trois panneaux, après fixation de l'élément mâle 1 et des deux éléments femelles 2, chacun sur un de ces panneaux.

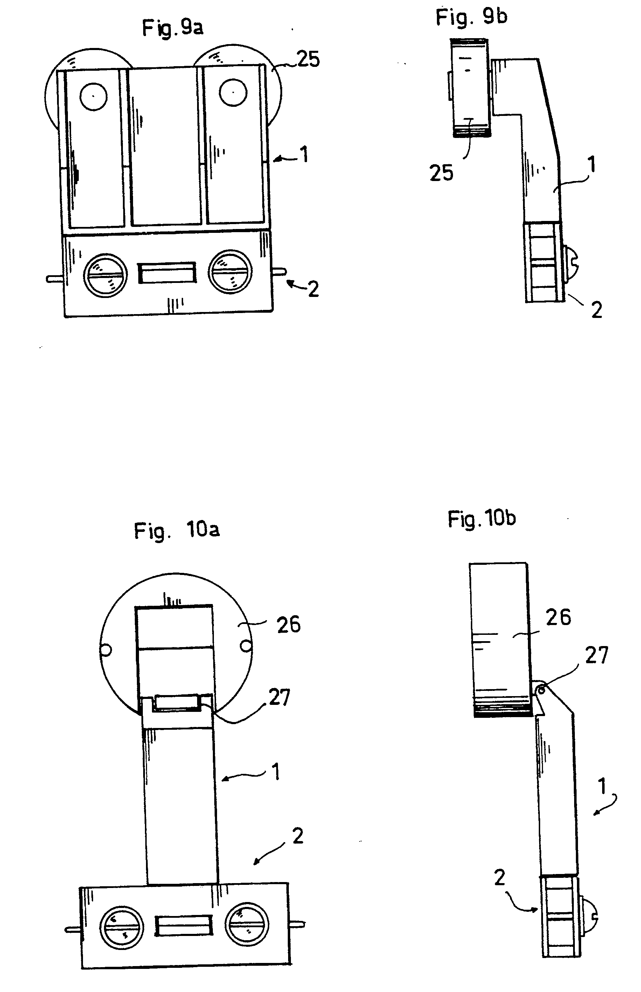

Les figures 9 à 11 représentent quant à elles, des systèmes d'assemblage comprenant un élément femelle 2 identique à ceux décrits ci-avant, apte à être solidarisé sur un support et un élément mâle 1 comportant des moyens de maintien de l'objet portés par le coulisseau 14.

Le système d'assemblage représenté aux figures 9a et 9b est destiné à la fixation de battants coulissants sur un support. A cet effet, l'élément femelle 2 est fixé sur ce battant et les moyens de maintien présentent la forme d'une potence portant deux galets 25 aptes à venir se loger dans un rail de guidage.

Le système d'assemblage représenté aux figures 10a et 10b est du type à charnières dont les moyens de maintien sont articulés au moyen d'une charnière 27 sur une ferrure 26 destinée à être portée par le battant ouvrant.

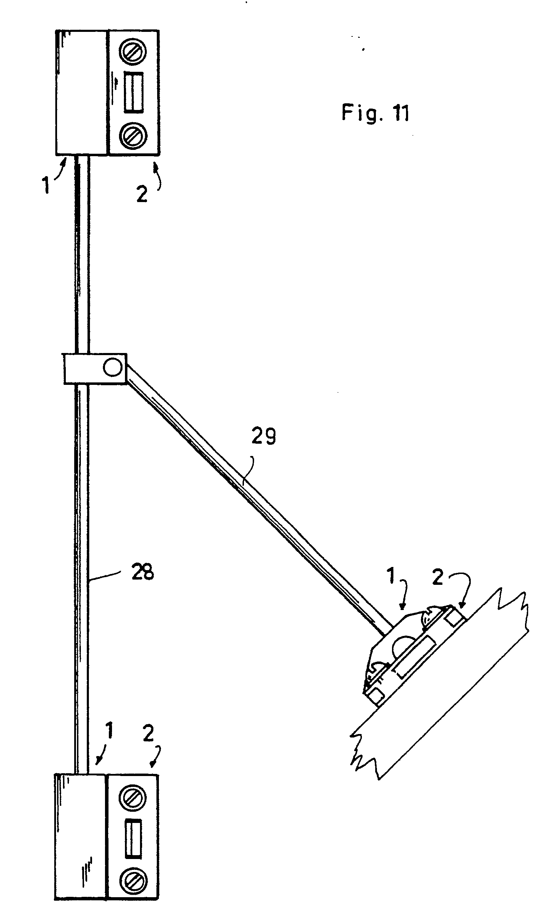

Le système d'assemblage de la figure 11 est adapté pour former un compas d'abattant. La tringle fixe 28 de ce compas est portée à chacune de ces extrémités par un élément mâle 1 assemblé avec un élément femelle 2 solidarisé à un panneau fixe du meuble.

La branche mobile 29 du compas est quant à elle portée par un troisième élément mâle 1 assemblé avec un élément femelle 2 fixé sur l'abattant.

## Revendications

1. Dispositif d'assemblage, sur un support, d'un élément (1, 2) comportant une platine (3 ; 4) dotée d'au moins une lumière oblongue (12) et adaptée pour être appliquée et fixée sur ledit support, ledit dispositif d'assemblage étant adapté pour permettre d'ajuster après assemblage la position dudit élément sur ledit support et étant caractérisé en ce qu'il comprend, pour chaque lumière oblongue (12) :

- un logement (6) ménagé dans la platine (3 ; 4) et dans lequel débouche ladite lumière oblongue,
- un disque excentrique (8) disposé dans le logement (6) et de forme conjuguée dudit logement, ledit disque excentrique étant doté d'un alésage (9) excentré ménagé de façon à se trouver en regard de la lumière oblongue (12),
- un organe de fixation (20 ; 30, 31) doté d'une douille (20b ; 30a) de section conjuguée de l'alésage (9) du disque (8) et d'une tige d'ancrage (20c ; 31b) apte à traverser la lumière oblongue (12) de la platine (3 ; 4) et ledit alésage (9),
- des moyens de manoeuvre (10) du disque excentrique (8) adaptés pour permettre une rotation dudit disque autour de la tige d'ancrage (20c; 31b) de l'organe de fixation (20 ; 30, 31).

2. Dispositif d'assemblage selon la revendication 1, caractérisé en ce que le disque excentrique (8) présente une paroi périphérique crantée adaptée pour éviter toute rotation accidentelle dudit disque à l'intérieur de son logement (6).

3. Dispositif d'assemblage selon l'une des revendications 1 ou 2, caractérisé en ce que les moyens de manoeuvre du disque excentrique (8) sont constitués d'un organe de manoeuvre (10) s'étendant en saillie sur la face périphérique dudit disque et de forme adaptée pour déboucher hors du logement (6).

4. Dispositif d'assemblage selon la revendication 3, caractérisé en ce qu'il comprend une paroi frontale (4 ; 3) dotée d'une lumière oblongue (12) en regard de chaque lumière oblongue (12) de la platine (3 ; 4) et délimitant avec ladite platine et pour chacun des disques excentriques (8), un logement (6) doté d'une ouverture transversale pour le passage de l'organe de manoeuvre (10).

5. Dispositif d'assemblage selon la revendication 4, caractérisé en ce que les organes de fixation de la platine sont constitués par un rivet ou une cheville à ailettes (20) comportant une douille (20b) de section et de longueur respectivement conjuguées de la section de l'alésage (9) du disque excentrique (8) et de l'épaisseur de l'élément (1, 2), ladite douille comportant une collerette terminale (20a) d'appui sur la paroi frontale avant (4 ; 3) de l'élément (1, 2) et portant une tige d'ancrage (20c) de section inférieure à celle de ladite douille.

6. Dispositif d'assemblage selon la revendication 4, caractérisé en ce que les organes de fixation comprennent :

- une entretoise (30) constituée d'un manchon (30a) de diamètre externe et de longueur respectivement conjugués de la section de l'alésage (9) du disque excentré (8) et de l'épaisseur de l'élément (1, 2), ledit manchon étant doté d'une collerette terminale (30b) d'appui sur la paroi frontale avant (4 ; 3) de l'élément (1, 2),
- une vis de fixation (31) dotée d'une tête de manoeuvre (31a) adaptée pour venir en appui sur la collerette (30b) de l'entretoise, et d'une tige filetée (31b) adaptée pour traverser le manchon (30a).

7. Système d'assemblage pour l'accrochage de deux supports, dits premier et deuxième supports, caractérisé en ce qu'il comprend deux éléments (1, 2) aptes à être solidarisés respectivement auxdits premier et deuxième supports :

- un élément (2), dit femelle, comportant une platine (3 ; 4) dotée d'une glissière (5) en saillie sur ladite platine et de deux dispositifs d'assemblage conformes à l'une des revendications 1 à 6 disposés de part et d'autre de ladite glissière,
- un élément (1), dit mâle, comportant une platine (3 ; 4) portant un coulisseau (14) de forme adaptée pour coulisser dans la glissière (5) de l'élément femelle (2), et dotée de deux dispositifs d'assemblage conforme à l'une des revendications 1 à 6 disposés de part et d'autre dudit coulisseau,
- lesdits glissière (5) et coulisseau (14) étant conformés de façon à permettre le blocage du coulisseau dans la glissière.

8. Système d'assemblage pour l'accrochage de deux supports, dits premier et deuxième supports, caractérisé en ce qu'il comprend :

- deux éléments (2), dits femelles, comportant une platine (3 ; 4) dotée d'une glissière (5) en saillie sur ladite platine et de deux dispositifs d'assemblage conformes à l'une des revendications 1 à 6 disposés de part et d'autre de ladite glissière,
- un élément (1), dit mâle, comportant deux coulisseaux (14) de formes adaptées pour coulisser, chacun, dans la glissière (5) d'un élément femelle (2),
- lesdits glissières (5) et coulisseaux (14) étant conformés de façon à permettre le blocage des coulisseaux à l'intérieur des glissières.

9. Système d'assemblage pour l'accrochage d'un objet sur un support, caractérisé en ce qu'il comprend deux éléments (1, 2), aptes à être solidarisés respectivement auxdits objet et support :

- un élément (2), dit femelle, solidarisé au support et comportant une platine (3 ; 4) dotée d'une glissière (5) en saillie sur ladite platine et de deux dispositifs d'assemblage conformes à l'une des revendications 1 à 6 disposés de part et d'autre de ladite glissière,
- un élément (1), dit mâle, solidarisé à l'objet, comportant un coulisseau (14) de forme adaptée pour coulisser dans la glissière (5) de l'élément femelle (2) et des moyens de maintien (25 ; 26, 27 ; 28, 29) de l'objet, portés par le coulisseau (14) et de formes adaptées à la nature et à la forme dudit objet.

10. Système d'assemblage selon la revendication 9, caractérisé en ce que les moyens de maintien de l'objet comprennent des moyens de fixation (26) de l'élément mâle (1) sur ledit objet articulés sur le coulisseau (14) par un système à charnière (27).

11. Système d'assemblage selon l'une des revendications 7 à 10, dans lequel :
– la platine (3 ; 4) de chaque élément femelle (2) comporte à l'intérieur de la glissière (5) une languette flexible (15) s'étendant en saillie et apte à se déformer élastiquement par rapport à ladite platine, ladite languette étant dotée d'un ergot d'encliquetage (15a),
– chaque coulisseau (14) de l'élément mâle (1) est doté d'une lumière (16) apte à loger l'ergot d'encliquetage (15a) de la languette (15).

12. Système d'assemblage selon l'une des revendications 7 à 10, caractérisé en ce que :
– chaque coulisseau (14) de l'élément mâle (1) comporte une languette flexible (15) s'étendant en saillie et apte à se déformer élastiquement par rapport audit coulisseau, ladite languette étant dotée d'un ergot d'encliquetage (15a),
– chaque élément femelle (2) comporte une glissière (5) dotée d'une paroi frontale (4 ; 3) dotée d'une lumière (13) apte à loger l'ergot d'encliquetage (15a) de la languette (15).

13. Application d'un système d'assemblage conforme à l'une des revendications 7 à 12 pour l'assemblage de supports dans le domaine de l'ameublement, tels que panneaux de meubles, profilés, étagères.

**Ansprüche**

1. Vorrichtung zur Befestigung auf einer Unterlage eines Elementes (1, 2) umfassend eine Platte (3; 4) mit mindestens einem länglichen Loch (12) und so beschaffen, daß sie an der besagten Unterlage angebracht und befestigt wird, wobei die besagte Befestigungsvorrichtung so beschaffen ist, daß sie nach der Befestigung Einstellung der Lage des besagten Elements an der besagten Unterlage gestattet und dadurch gekennzeichnet ist, daß sie für jedes längliche Loch (12) die folgenden Teile umfaßt :
– ein Gehäuse (6) in Platte (3 ; 4), in das das besagte längliche Loch mündet,
– eine exzentrische Scheibe (8) in Gehäuse (6) mit einer zu dem besagten Gehäuse passenden Form, wobei die exzentrische Scheibe mit einer exzentrischen Bohrung (9) versehen ist, deren Anordnung so ist, daß sie sich gegenüber des länglichen Loches (12) befindet,
– ein Befestigungsorgan (20 ; 30, 31) mit einer Hülse (20b ; 30a) mit der Bohrung (9) der Scheibe (8) entsprechendem Querschnitt und einem Verankerungsschaft (20c ; 31b), der so beschaffen ist, daß er durch das längliche Loch (12) der Platte (3 ; 4) und die besagte Bohrung (9) hindurchgeht,
– Betätigungsmittel (10) der exzentrischen Scheibe (8), die so beschaffen sind, daß sie Drehung der besagten Scheibe um den Verankerungsschaft (20c ; 31b) des Befestigungsorgans (20 ; 30, 31) gestatten.

2. Befestigungsvorrichtung nach Anspruch 1, dadurch gekennzeichnet, daß die exzentrische Scheibe (8) eine gerändelte periphere Wand aufweist, die so beschaffen ist, daß sie jede zufällige Drehung der besagten Scheibe innerhalb ihres Gehäuses (6) verhindert.

3. Befestigungsvorrichtung nach einem der Ansprüche 1 oder 2, dadurch gekennzeichnet, daß die Betätigungsmittel der Exzenterscheibe (8) in einem Betätigungsorgan (10) bestehen, das sich von der peripheren Fläche der besagten Scheibe vorspringend erstreckt und so beschaffen ist, daß es außerhalb des Gehäuses (6) austritt.

4. Befestigungsvorrichtung nach Anspruch 3, dadurch gekennzeichnet, daß sie eine Stirnwand (4 ; 3) mit einem länglichen Loch (12) gegenüber jedem länglichen Loch (12) der Platte (3 ; 4) umfaßt und mit der besagten Platte und für jede der Exzenterscheiben (8) ein Gehäuse (6) abgrenzt, das mit einer Queröffnung für den Durchgang des Betätigungsorgans (10) versehen ist.

5. Befestigungsvorrichtung nach Anspruch 4, dadurch gekennzeichnet, daß die Befestigungsorgane der Platte in einem Niet oder einem mit Rippen versehenen Stift (20) bestehen, der eine Hülse (20b) umfaßt, dessen Querschnitt und Länge dem Querschnitt der Bohrung (9) der exzentrischen Scheibe (8) bzw. der Dicke des Elementes (1, 2) entsprechen, wobei die besagte Hülse einen Endflansch (20a) zur Abstützung an der vorderen Stirnwand (4 ; 3) des Elementes (1, 2) umfaßt und mit einem Verankerungsschaft (20c) versehen ist, dessen Querschnitt geringer ist als der der besagten Hülse.

6. Befestigungsvorrichtung nach Anspruch 4, dadurch gekennzeichnet, daß die Befestigungsorgane folgende Teile umfassen :
– eine Abstandhülse (30) in der Form einer Hülse (30a), deren Außendurchmesser und Länge dem Querschnitt der Bohrung (9) der exzentrischen Scheibe (8) bzw. der Dicke des Elementes (1, 2) entsprechen, wobei die besagte Hülse mit einem Endflansch (30b) zur Abstützung an der vorderen Stirnwand (4 ; 3) des Elementes (1, 2) versehen ist,
– eine Befestigungsschraube (31) mit einem Betätigungskopf (31a), die so beschaffen ist, daß sie sich an Flansch (30b) der Abstandhülse abstützt, und mit einem Gewindeschaft (31b), der so beschaffen ist, daß er durch die Hülse (30a) hindurchgeht.

7. Befestigungssysten zur Anbringung von zwei Unterlagen, der sogenannten ersten und der sogenannten zweiten Unterlage, dadurch gekennzeichnet, daß es zwei Elemente (1, 2) umfaßt, die so beschaffen sind, daß sie fest mit der besagten ersten bzw. der besagten zweiten Unterlage verbunden werden können, und zwar :

– ein Element (2), das sogenannte Aufnahmeelement, umfassend eine Platte (3 ; 4) mit einer Führung (5), die von der besagten Platte vorsteht, und mit zwei Befestigungsvorrichtungen nach einem der Ansprüche 1 bis 6 zu beiden Seiten der besagten Führung,

– ein Element (1), das sogenannte Einsteckelement, umfassend eine Platte (3 ; 4) mit einem Schieber (14), dessen Form so beschaffen ist, daß er in Führung (5) des Aufnahmeelements (2) gleitet, und der mit zwei Befestigungsvorrichtungen nach einem der Ansprüche I bis 6 zu beiden Seiten des besagten Schiebers versehen ist,

– wobei die besagte Führung (5) und der besagte Schieber (14) so gestaltet sind, daß sie das Blockieren des Schiebers innerhalb der Führung gestatten.

8. Befestigungssystem zur Anbringung von zwei Unterlagen, der sogenannten ersten und der sogenannten zweiten Unterlage, dadurch gekennzeichnet, daß es folgende Teile umfaßt :

– zwei Elemente (2), die sogenannten Aufnahmeelemente, umfassend eine Platte (3 ; 4) mit einer Führung (5), die von der besagten Platte vorsteht, und mit zwei Befestigungsvorrichtungen nach einem der Ansprüche 1 bis 6 zu beiden Seiten der besagten Führung,

– ein Element (1), das sogenannte Einsteckelement, umfassend zwei Schieber (14), deren Formen so beschaffen sind, daß jede davon in Führung (5) eines Aufnahmeelements (2) gleitet, wobei die besagten Führungen (5) und die Schieber (14) miteinander übereinstimmen, so daß sie das Blockieren der Schieber innerhalb der Führungen gestatten.

9. Befestigungssystem zur Anbringung eines Gegenstands an einer Unterlage, dadurch gekennzeichnet, daß es zwei Elemente (1, 2) umfaßt, die so beschaffen sind, daß sie fest mit dem besagten Gegenstand bzw. der besagten Unterlage verbunden werden :

– ein Element (2), das sogenannte Aufnahmeelement, das fest mit der Unterlage verbunden wird, und eine Platte (3 ; 4) mit einer von der besagten Platte vorstehenden Führung (5) und zwei Befestigungsvorrichtungen nach einem der Ansprüche 1 bis 6 zu beiden Seiten der besagten Führung,

– ein mit dem Gegenstand fest verbundenes Element (1), das sogenannte Einsteckelement, mit einem Schieber (14), dessen Form so beschaffen ist, daß er in Führung (5) des Aufnahmeelements (2) gleitet, sowie mit Mitteln zum Festmachen (25 ; 26, 27 ; 28, 29) des Gegenstandes, wobei die besagten Mittel an dem Schieber (14) angebracht und der Beschaffenheit und Form des besagten Gegenstands entsprechend beschaffen sind.

10. Befestigungssystem nach Anspruch 9, dadurch gekennzeichnet, daß die Mittel zum Festmachen des Gegenstands Mittel zur Befestigung (26) des Einsteckelements (1) an dem besagten Gegenstand umfassen, die an dem Schieber (14) mit Hilfe eines Gelenksystems (27) gelenkig angebracht sind.

11. Befestigungssystem nach einem der Ansprüche 7 bis 10, bei dem :

– die Platte (3 ; 4) jedes Aufnahmeelements (2) im Innern der Führung (5) eine flexible Zunge (15) umfaßt, die sich vorstehend erstreckt und in der Lage ist, sich elastisch im Verhältnis zu der besagten Platte zu verformen, wobei die besagte Zunge mit einem Einrastkopf (15a) versehen ist,

– jeder Schieber (14) des Einsteckelements (1) mit einer Öffnung (16) versehen ist, die so beschaffen ist, daß sie den Einrastkopf (15a) der Zunge (15) aufnimmt.

12. Befestigungssystem nach einem der Ansprüche 7 bis 10, dadurch gekennzeichnet :

– daß jeder Schieber (14) des Einsteckelements (1) eine sich vorstehend erstreckende flexible Zunge (15) umfaßt, die in der Lage ist, sich elastisch im Verhältnis zu dem besagten Schieber zu verformen, wobei die besagte Zunge mit einem Einrastkopf (15a) versehen ist,

– daß jedes Aufnahmeelement (2) eine Führung (5) mit einer Stirnwand (4 ; 3) mit einer Öffnung (13) umfaßt, die so beschaffen ist, daß sie den Einrastkopf (15a) der Zunge (15) aüfnimmt.

13. Anwendung eines Befestigungssystems nach einem der Ansprüche 7 bis 12 zur Befestigung von Unterlagen auf dem Möbelsektor wie Möbelplatten, Profilen und Regalen.

## Claims

1. Device for assembling, on a support, an element (1, 2) comprising a plate (3 ; 4) endowed with at least one oblong aperture (12) and so designed as to be applied and secured to said support, said assembly device being so designed as to enable, after assembly, adjustment of the position of said element on said support and being characterised in that it comprises, for each oblong aperture (12) :

– a housing (6) provided within plate (3 ; 4) and into which leads said oblong aperture,

– an eccentric disc (8) arranged in housing (6) and of a shape matching said housing, said eccentric disc being provided with an eccentric borehole (9) so arranged as to be opposite oblong aperture (12),

– a securing device (20 ; 30, 31) endowed with a sleeve (20b ; 30a) with a section matching borehole (9) of disc (8) and with an anchoring shank (20c ; 31b) capable of passing through oblong aperture (12) of plate (3 ; 4) and said borehole (9),

– operating means (10) of eccentric disc (8) so designed as to enable rotation of said disc about anchoring shank (20c ; 31b) of securing device (20 ; 30, 31).

2. Assembly device according to claim 1, characterised in that eccentric disc (8) has a knurled peripheral wall so designed as to avoid any accidental rotation of said disc within its housing (6).

3. Assembly device according to one of claims 1 or 2, characterised in that the operating means of eccentric disc (8) consist in an operating device (10) projecting from the peripheral face of said disc and so designed as to emerge outside housing (6).

4. Assembly device according to claim 3, characterised in that it comprises a frontal face wall (4 ; 3) endowed with an oblong aperture (12) opposite each oblong aperture (12) of plate (3 ; 4) and delimiting with said plate and for each of eccentric discs (8) a housing (6) endowed with a transverse aperture for passing operating device (10).

5. Assembly device according to claim 4, characterised in that the securing devices of the plate consist in a rivet or a ribbed pin (20) comprising a sleeve (20b), the section and length of which, respectively, match the section of borehole (9) of eccentric disc (8) and the thickness of element (1, 2), said sleeve comprising an end flange (20a) for supporting it on frontal face wall (4 ; 3) of element (1, 2) and having an anchoring shank (20c) of a section smaller than that of said sleeve.

6. Assembly device according to claim 4, characterised in that the securing devices comprise :

– a spacer tube (30) consisting in a sleeve (30a), the outer diameter and length of which, respectively, match the section of borehole (9) of eccentric disc (8) and the thickness of element (1, 2) said sleeve being endowed with an end flange (30b) for supporting it on frontal face wall (4 ; 3) of element (1, 2),

– a securing screw (31) endowed with an operating head (31a) so designed as to abut flange (30b) of the spacer tube, and with a threaded shank (31b) so designed as to pass through sleeve (30a).

7. Assembly system for joining two supports, the so-called first and second supports, characterised in that it comprises two elements (1, 2) capable of being firmly connected with the said first and second supports, respectively :

– an element (2), the so-called female element, comprising a plate (3 ; 4) endowed with a guide (5) projecting from said plate and two assembly devices according to one of claims 1 to 6, arranged on either side of said guide,

– an element (1), the so-called male element, comprising a plate (3 ; 4) with a slide (14) shaped in such a way as to slide within guide (5) of female element (2) and endowed with two assembly devices according to one of claims 1 to 6, arranged on either side of said slide,

– said guide (5) and slide (14) being so designed as to enable the slide to be blocked within the guide.

8. Assembly system for joining two supports, the so-called first and second supports, characterised in that it comprises :

– two elements (2), the so-called female elements, comprising a plate (3 ; 4) endowed with a guide (5) projecting from said plate and two assembly devices according to one of claims 1 to 6 arranged on either side of said guide,

– an element (1), the so-called male element, comprising two slides (14) shaped in such a way as to slide, each of them, within guide (5) of a female element (2),

– said guides (5) and slides (14) being so designed as to enable blocking of the slides within the guides.

9. Assembly system for attaching an object to a support, characterised in that it comprises two elements (1, 2), as designed as to be firmly joined to said object and said support, respectively ;

– an element (2), the so-called female element, firmly joined to the support and comprising a plate (3 ; 4) endowed with a guide (5) projecting from said plate and with two assembly devices according to one of claims 1 to 6 arranged on either aide of said guide,

– an element (1), the so-called male element, firmly connected with the object, comprising a guide (14) shaped in such a way as to slide in guide (5) of female element (2) and means for retaining the object (25 ; 26, 27 ; 28, 29) borne by slide (14) and designed in accordance with the type and shape of said object.

10. Assembly system according to claim 9, characterised in that the means for retaining the object comprise means for securing (26) male element (1) on said object, articulated on slide (14) by a hinge system (27)).

11. Assembly device according to one of claims 7 to 10, in which :

– plate (3 ; 4) of each female element (2) comprises inside guide (5) a flexible tongue (15) extending so as to project and so designed as to be elastically deformed in relation to said plate, said tongue being endowed with a ratchet head (15a),

– each slide (14) of male element (1) is endowed with an aperture (16) capable of accommodating ratchet head (15a) of tongue (15).

12. Assembly system according to one of claims 7 to 10, characterised in that :

– each slide (14) of male element (1) comprises a flexible tongue (15) extending so as to project and so designed as to be elastically deformed in relation to said slide, said tongue being provided with a ratchet head (15a),

– each female element (2) comprises a guide (5) endowed with a face wall (4 ; 3) provided with an aperture (13) so designed as to accommodate ratchet head (15a) of tongue (15).

13. Application of an assembly system according to one of claims 7 to 12 for assembling supports in the sphere of furnishing, such as panels of furniture, mouldings and shelf units.

Fig. 1

Fig. 2

Fig. 3

Fig. 4a

Fig. 4b

Fig. 5

Fig. 6

Fig. 7

Fig. 8

Fig.9a

Fig. 9b

25

1

2

25

1

2

Fig. 10a

Fig.10b

26

27

1

2

26

27

1

2

Fig. 11

29

28

1

2

1

2

1

2